# EUROPEAN PATENT APPLICATION

(11) **EP 2 296 366 A1**
(43) Date of publication of application: **16.03.2011**
(21) Application number: 09305809.7
(22) Date of filing: 03.09.2009
(51) Int. Cl.: H04N 5/00

(54) **Methods for transmission and reception of video services**

(71) Applicant: Thomson Licensing, Inc., 92100 Boulogne-Billancourt (FR)
(72) Inventor: Delcroix, Gaetan, 92648, Boulogne cedex (FR); Fleury, Jean-François, 92648, Boulogne cedex (FR); Berthaud, Tony, 92648, Boulogne cedex (FR)
(74) Representative: Berthier, Karine

(57) **Abstract**

This invention concerns a method for transmitting video services in a digital video transmission network. The method comprises the steps, at the level of a transmission device (5) by the steps of providing a first multiplex (3.1) comprising a first video service (P1) in a first resolution, providing, in the first multiplex (3.1), a second video service (P2) in a second resolution lower than the first resolution wherein the second video service (P2) is adjacent to the first video service (P1) in a predetermined order and wherein the first and second video services (P1, P2) contain distinct content. The invention also concerns a method for receiving video services.

## Description

This invention relates to methods for the transmission and reception of video services, in view of reducing the delay perceived by the user when switching channels. The invention can be applied in a Video over Internet Protocol delivery network and an associated transmission device and receiver, but is not limited to this environment.

In a network for transmitting television programs using the Internet Protocol, the time required for switching from one program or channel to another, e.g. from one multicast stream to another, is a key aspect of the quality of user experience.

The following aspects contribute, among other things, to the delay:
(a) Multicast switching time: this is the time between the moment at which an IGMP request for joining a new multicast group leaves a receiver and the moment it receives the first multicast stream packet. This delay depends on the network.
(b) Receiver buffering time for de-jittering purposes. The buffering time ought to take into account most network conditions. The size of the de-jittering buffer is usually specific to the network.
(c) Video decoding start time: before a video stream can be decoded, the receiver needs to extract service information from the multicast stream in order to be able to demultiplex the right packets to be buffered. In a DVB network, this would includes reception of the Program Association Table (PAT), the Program Map Table (PMT) corresponding to the selected DVB service (corresponding to a 'channel') and eventually the descrambling key, if the DVB service is scrambled. Then it is necessary to receive a full 'I' frame. I-frame reception time depends on the length and constitution of the groups of pictures (GOPs) in the video stream.
(d) Decoding time: it is the time required by the receiver to decompress and display the video. This delay depends on the video circuitry and the video decoder's internal buffer management.

The overall delay may be significant, especially when the user scans through a number of DVB services consecutively ('zapping').

A number of approaches have been proposed to either reduce the above delay components and/or to render the delay less visible to the viewer.

The document "Fast channel change in RTP - Version 1.0 - Technical Working Paper - December 2007" ('document 1' in the rest of the document) edited by ISMA (Internet Stream Media Alliance) describes several approaches. It is supposed that a receiver tunes in to a multicast service for receiving content. One of the approaches is to include, into a same multicast service, a low-resolution stream and a full-resolution stream corresponding both to the same content or program or channel, the low-resolution stream comprising I-frames at a greater frequency than the full-resolution stream, the receiver decoding and displaying the low-resolution stream up-converted to full-resolution until an I-frame is received from the full-resolution stream.
The invention concerns a method for transmitting video services in a digital video transmission network, the method being characterized, at the level of a transmission device by the steps of:
- providing a first multiplex comprising a first video service in a first resolution;
- providing, in the first multiplex, a second video service in a second resolution lower than the first resolution wherein the second video service is adjacent to the first video service in a predetermined order and wherein the first and second video services contain distinct content.
The invention also concerns a method for receiving video services in a digital video transmission network, the method being characterized, at the level of a receiver by the steps of:
- receiving a first multiplex comprising a first video service in a first resolution and a second video service in a second resolution lower than the first resolution wherein the second video service;
- receiving a control input for displaying the second video service;
- processing second video service data received through the first multiplex for display at the first resolution;
- receiving a second multiplex comprising the second video service at the first resolution;
- switching from displaying the second video service received through the first multiplex to displaying the second video service received through the second multiplex.
The inventors have recognized that remote controls are designed to encourage people to use the channel up or channel down buttons to switch respectively to the previous or the next channel in a predefined service list. Moreover, they came to the conclusion that when users jump from one channel to another by typing the channel number on the remote control's number pad, the delay for switching to the new channel is of less importance than when users sequentially switch from one program to the next. They have thus devised a system which reduces the perceived delay for showing a channel adjacent to a currently viewed channel.

The invention will be better understood and illustrated by means of the following embodiment, by no means limiting, described with reference to the figures attached, among which:
- Figure 1 is a block diagram of a network according to the embodiment;
- Figure 2 is a block diagram of the hardware architecture of the receiver of figure 1;
- Figures 3 is a diagram of a combination of a plurality of DVB services in a same multicast service according to the preferred embodiment of the invention;
- Figure 4 is a functional diagram of a device for constructing a multicast service according to figure 3;
- Figure 5 is a temporal diagram of the switching process between two multicast services each containing only a single full-resolution program;
- Figure 6 is a temporal diagram of the switching process between multicast services according to the embodiment.

The present embodiment is based on an implementation of an Internet Protocol (IP) based network designed for transporting MPEG-2 Transport Streams. The European Telecommunications Standards Institute (ETSI) has normalized such a network in a document with the reference ETSI TS 102 034. The latest version available at the time of filing of this application was version 1.4.1, August 2009. It is explicitly noted that the invention can be used in networks using other technologies than those mentioned above and in the description below.

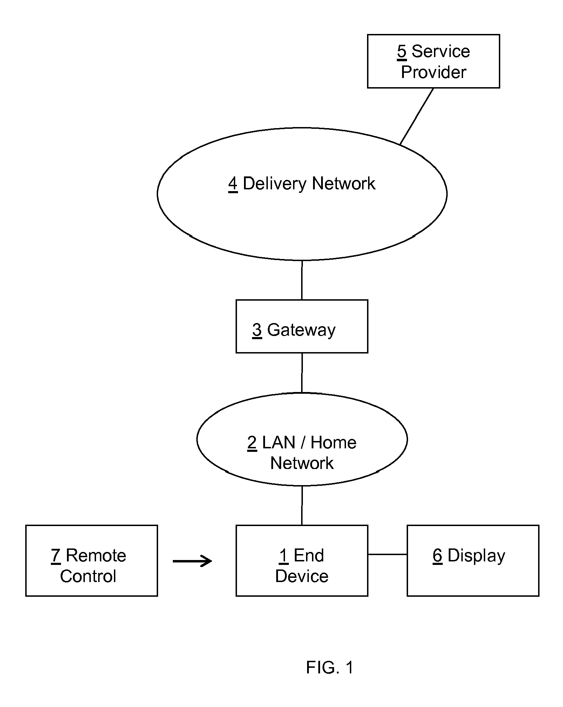

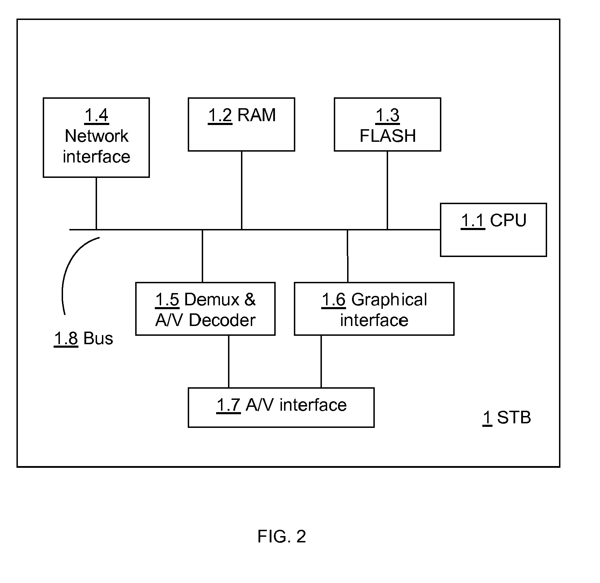

In Figures 1 and 2, the modules shown are functional units that may or may not correspond to physically distinguishable units. For example, these modules or some of them can be grouped together in a single component, or constitute functions of the same software. On the contrary, some modules may also be composed of separate physical entities.

The main elements of a system providing a video over IP service are shown in figure 1. An end device 1, typically a Set Top Box, referred to as 'STB' in the rest of the document, is connected to a gateway 3 by means of a local area network or 'home network' 2. The local area network (LAN) is an Ethernet network and can also be another type of wired network, or a wireless LAN. The home network can also limit itself to an Ethernet point-to-point link, as in the embodiment shown in figure 1, although of course the home network will typically comprise a plurality of end devices. End device 1 comprises an interface to a television set 6 acting as a display.

Gateway 3 connects the local area network 2 to the delivery network 4 by which it can communicate with a service provider 5. The role of the service provider is to provide content services to the end device via the delivery network and the gateway.

According to the embodiment, the gateway includes an ADSL modem which is used to connect the LAN to the Internet delivery network 4 by means of an ADSL connection. The gateway could just as well include another type of DSL modem, or modem used for any other broadband connection type (DOCSIS, PON...). The gateway 3 implements the well-known Internet Group Management Protocol (IGMP). Using that protocol, end devices may subscribe to multicast groups through the gateway, in particular in view of receiving multicast services provided by the service provider. The gateway will then forward on the home network the multicast packets corresponding to the groups to which the end device(s) on the home network have subscribed.

A remote control 7 is used to control the STB. The remote control 7 preferably has both a number pad for entering a desired program number directly, as well as 'program/channel up' and 'program/channel down' keys to select the previous or the next program compared to the current program, according to an order that is determined by the service provider and which would be a common order of viewing the programs when zapping from one program to another. In a preferred embodiment, the predetermined order is the order of display of programs in an electronic program guide provided by the service provider to the user. The user will then intuitively adapt to such a predetermined order. However, the predetermined order may be the alphanumerical order of the names of the programs, and/or result at least partially from groupings of programs having similar themes (sports channels for instance).

As will be described later on, this order will influence the constitution of the different multicast services to which the receiver can subscribe. Note that the predefined order is not necessarily fixed: it can be modified by the service provider to fit changes in the available programs, to increase performance in view of new statistics regarding program consumption etc... The service provider will however have to communicate to the receiver the order of programs it will use in the multicast services according to the present embodiment in order to benefit from its advantages. This communication may be explicit (i.e. a list determining the order is sent) or result implicitly from variables used for another purpose (e.g. the order may be determined according to increasing program identifiers provided in the MPEG system tables).

According to a variant embodiment, the predetermined order concerns only part of the available programs, e.g. those most frequently viewed, and only the multicast services containing this subset of programs will be constructed as described.

The essential parts of end device STB 1 with regard to the video over IP service are shown in figure 2. The STB comprises a network interface 1.4, which is an Ethernet type interface in the embodiment. It comprises a memory of the Random Access Memory type, noted as RAM 1.2 corresponding to the main memory, and a secondary memory of the Flash type 1.3, that can store data even when the device is switched off. The STB also comprises a central processing unit 1.1 noted as CPU. The audio-video decoder 1.5 and the graphical user interface 1.6 prepare the content that is sent to display 6 by means of the audio-video interface. In particular, the decoder 1.5 comprises a demultiplexer which filters MPEG2 transport stream packets according to instructions provided by the CPU in view of service data provided in the streams received from service provider 5 and user input. The data travels between the different modules via an internal bus 1.8. The CPU also configures the A/V decoder and demultiplexer 1.5 for upconverting low-resolution video to nominal (standard or full) resolution. A conditional access sub-module (not shown) is provided for access right management; descrambling key processing and descrambling of the relevant de-multiplexed packet payloads.

Memory 1.3 stores the STB's operating system, the user interface application and the software for carrying out the actions from the STB 1, under control of the CPU.

Service provider 5 proposes multicast services, each service comprising a transport stream which itself comprises one or more programs (also called 'DVB services'). In the present embodiment a program and a DVB service are considered to be one and the same object - they are comparable to a television 'channel'. This object is to be distinguished from a multicast service, which may comprise more than one program or DVB service or 'channel'. The difference in language is due to the fact that the different standard documents use different terminology. As far as possible, the present application tries to use the terminology of the standard documents.

The transport stream (TS) corresponding to a multicast service is composed of MPEG 2 transport stream packets containing elementary audio, video streams and auxiliary (e.g. data) streams, as well as service information. The TS is composed of 188 byte packets comprising a header and a payload. The header of each packet comprises a so-called 'PID' or Packet Identifier. It is assumed in the present embodiment that the TS present in a multicast service comprises all service data required by the STB to determine which programs are multiplexed in the TS, inform the user of the available programs and demultiplex and decode them according to user requirements. This information is contained in tables which comprise the PAT (Program Association Table) and a number of PMTs (Program Map Tables). Once a transport stream is being demultiplexed, a receiver will acquire the PAT, using a predefined PID for demultiplexing the TS packets containing this table. The PAT identifies the programs (or DVB services) in the transport stream and identifies a PMT for each program. In practice, the PAT will contain a DVB service identifier and the PID of the packets containing the DVB service's Program Map Table. The Program Map Table contains the PIDs of the elementary streams composing the DVB service and will hence allow the STB to selectively extract these components from the transport stream. It is assumed that the list of DVB services available has already been acquired by the receiver from the service provider.

The PAT and PMT tables are defined by ISO/IEC13818-1, commonly referred to as 'MPEG 2 Systems'. In the present embodiment, the MPEG 2 transport stream is moreover compliant with ETSI TS 101 154, which is a standard document which defines the use of MPEG 2 in a DVB network.

Transport stream encapsulation for transport over an IP network is realised using RTP, UDP and finally the IP protocol. Given the size of a TS packet, several TS packets can be included within a single IP packet.

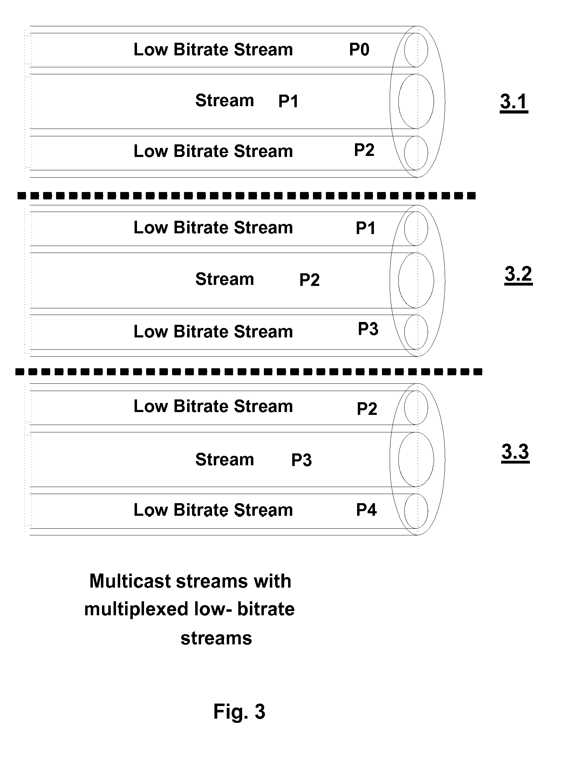

Figure 3 illustrates the transport stream configuration according to the present embodiment: each multicast service comprises a full-resolution (e.g. standard resolution) stream, along with two lower resolution streams, each of the three streams corresponding to a distinct program. Figure 3 shows three such multicast services, labelled 3.1, 3.2 and 3.3. Multicast service 3.1 comprises a transport stream which results from the multiplexing of programs P0, P1 and P2. Each multicast service also comprises service information..According to this description, a program is noted Px, where 'x' represents the rank in the predetermined sequence or order previously described. Thus Program P1 is adjacent to both programs P0 and P2. Multicast service 3.1 however comprises only low-resolution versions of programs P0 and P2.

Analogously, a multicast service 3.2 comprises a full-resolution version of program P2, but low resolution versions of programs P1 and P3. Thus, low-resolution versions programs will be redundantly sent in two distinct multicast services. In general, a multicast service 3.x will comprise a full resolution version of program Px and low resolution versions of programs Px-1 and Px+1.

Preferably, the predetermined program order is handled by a receiver in a cyclic way, i.e. when the user presses the channel up button although the highest rank in the order has been reached, the receiver will jump to the lowest order program. Conversely, when the current program is the lowest order program and the user presses the channel down button, the receiver will jump to the highest order program. In other words, the highest rank program and the lowest rank program are considered to be adjacent. The multicast services are adapted to this handling of the program order by the receiver, i.e. a multicast service containing a full resolution version of program P0 would contain a low resolution version of the highest ranking program.

In the present embodiment which represents a preferred embodiment, but not the only possible embodiment, a low resolution stream has the following characteristics:
- a maximum data rate of 300 to 500 Kbit/s, depending on the compression technology - in comparison, the data rate of the full resolution stream is between 1.5 and 4 Mbit/s, with 2 Mbit/s being a typical value;
- a resolution of approximately a quarter of the full-resolution stream ('QCIF' format);
- a Group of Picture (GOP) length of four or less, in order to obtain an I-frame (access point) periodicity of at least six I-frames per second in order to reduce the delay required for having a frame to decode in the video buffer;
- no B-frames (i.e. frames requiring bi-directional prediction), in order to reduce decompression time.

Note that a multicast service e.g. 3.1, does not contain a full-resolution version of adjacent programs, i.e. P0 and P2 for service 3.1. A multicast service contains either a full-resolution version of a program or a low-resolution version, but not both.

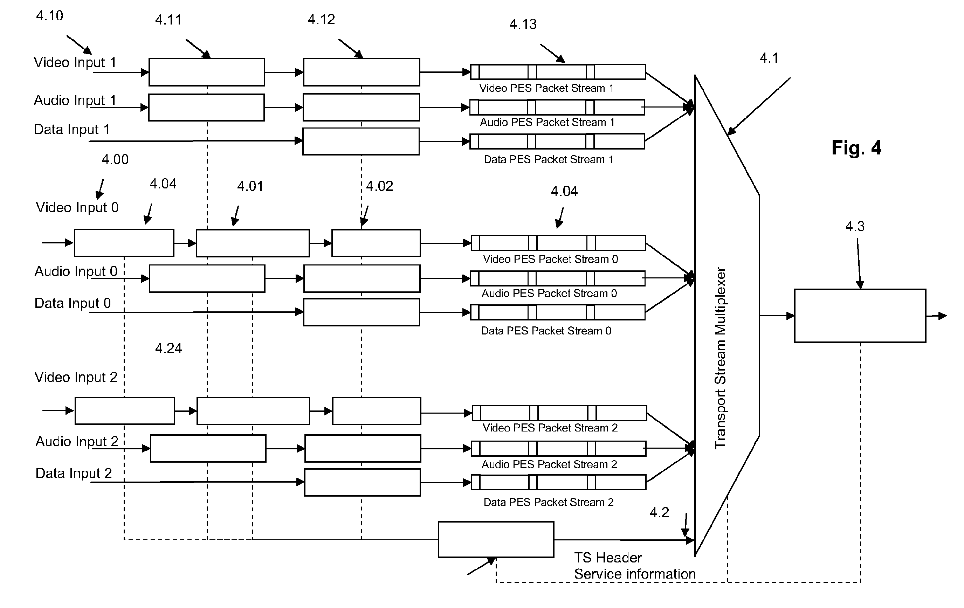

Figure 4 is a functional block diagram of a device for constructing a multicast service according to figure 3 for programs P0 to P2.

It is assumed that the video and audio signals are made available under uncompressed digital format. A path for encoding and packetizing program P1 at full resolution comprises a video path, an audio path and a data path. The video path comprises a video input 4.10 to a video encoder 4.11. The video encoder is an MPEG 2 encoder according to present embodiment, but of course other encoding technologies can be applied. The resulting compressed video is packetized into a video Program Elementary Stream (Video PES) 4.13 by a packetizer 4.12. Per se, this is a well-known encoding process. Audio input 1 is encoded using a sub-path having a similar structure except for the encoder which an audio encoder. Auxiliary data is simply packetized.

Compared to the full-resolution encoding path of P1, the encoding paths for P0 and P2 comprise respective sub-samplers 4.04 and 4.24 for reducing the resolution of the video signals to QCIF format before encoding (compression) according to the above defined criteria with regard to GOP size and lack of B-frames. The encoding and packetization process is controlled by controller 4.4.

Compressed and packetized programs P0 to P2 are fed to TS multiplexer 4.1 for encapsulating PES packets in transport packets with headers provided at input 4.2 by controller 4.4. TS packets containing the required service information (MPEG and DVB-SI tables) are also provided over this input by the controller 4.4.

In case the video signals for programs 0 and 2 in the example of figure 4 are provided in compressed format, it will be necessary to decompress them prior to feeding them to the sub-samplers.

In Figure 4, distinct compression and packetization paths are provided for the three programs constituting a multicast stream - this presentation is chosen for clarity purposes, but an actual implementation can differ and in particular use one functional block such as an encoder or packetizer for several audio, respectively video and data components. The compressed and packetized programs may also be stored on a computer readable medium such as a hard disk prior to being fed to the multiplexer 4.1, or prior to being fed to the IP/UDP/RTP encapsulation block 4.3, or received in packetized form from an external source.

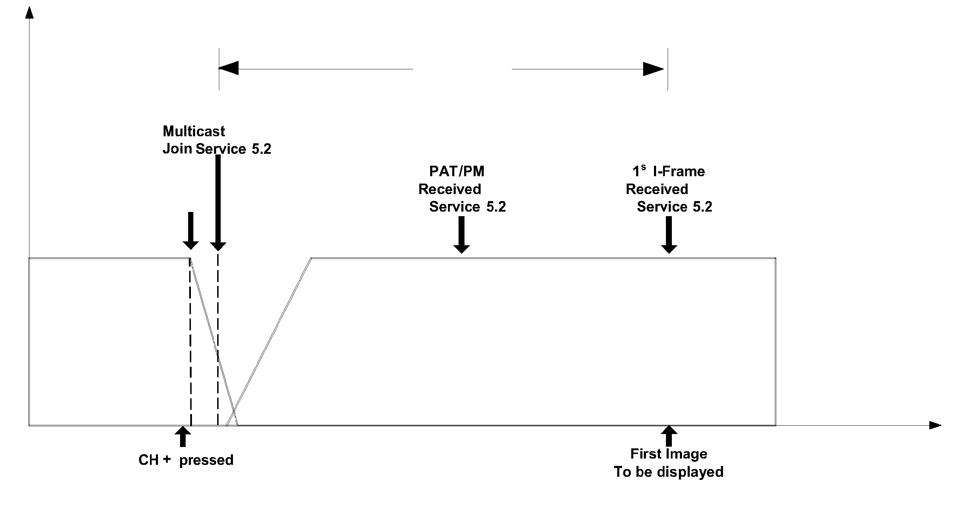

Figure 5 is a temporal diagram illustrating switching from a multicast service 5.1 containing only full resolution program P1 to another multicast service 5.2 also containing only one full resolution program P2 upon activation by a user of the 'channel up' key of the remote control.

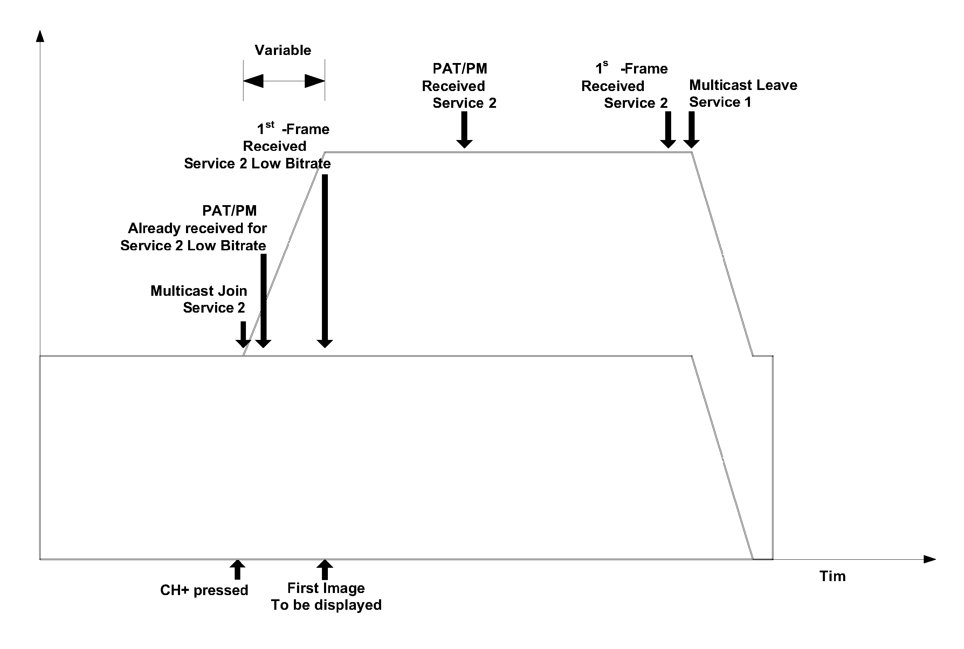

Figure 6 represents a temporal diagram of the switching from the multicast service 3.1 to the multicast service 3.2, upon activation by a user of the 'channel up' key of the remote control. These two multicast services contain the programs already described in relation with figure 3.

According to the case of figure 5, shortly after the channel up key has been pressed by the user, the receiver sends a multicast leave message to the gateway in order to leave multicast service 5.1. The receiver will also send a multicast join message to join multicast service 5.2. After some time, the receiver will start receiving packets from that multicast service 5.2. It will then wait until it receives the PAT table and the right PMT table for service 5.2. Using the PIDs defined in the PMT table, it will start extracting TS packets including TS video packets for program P2. The first image can be displayed when the first I-frame has been received,buffered and decoded.

Note that the number and type of frames that need to be buffered before a first frame can be displayed depends on the coding technology. In some cases, an I frame is sufficient, while in others a P frame may also be required. Lastly, the number of frames to be buffered also depends on the order in which they are transmitted.

The time between the pressing of the channel up key and the display of the first frame of program P2 comprises principally the time between the sending of the multicast join message and the reception of the PAT/PMT tables, as well as the time between the reception of the PMT table and the time corresponding to an I-frame being stored in the buffer. The first one is a function of the network switching time and the periodicity of the transmission of the tables, while the second one is function of the periodicity of I-frames and thus of GOP length and content.

In figure 6, upon activation of the channel up key, the receiver emits a multicast join message for multicast service 3.2. However, the receiver continues to receive packets for multicast service 3.1 and does not send a multicast leave message for that multicast service until later in the process. Instead, while the PAT/PMT tables are received for multicast service 3.2 and the first I-frame is buffered for full-resolution program P2, the receiver processes the PAT/PMT tables already received for service 3.1 in order to demultiplex TS packets for the low resolution version of P2. The PAT table has been previously acquired for multicast service 3.1 and the PMT tables for all three programs in that multicast service have been advantageously buffered and thus the PMT table for low-resolution program P2 is also available without delay. This permits rapid configuration of the demultiplexer/decoder to extract and buffer low-resolution video data for P2 from multicast stream 3.1. Once the receiver has buffered an I-frame for low resolution program P2, it can start displaying the low-resolution video stream of P2, appropriately up-converted to full resolution by audio/video decoder 1.5.

According to a variant embodiment, the receiverbuffers the last I frames received on one or more of the adjacent low resolution streams to speed up the acquisition process.

The time between the moment of pressing the channel up key and the display of the first frame of P2, although in low resolution, is thus much shortened: not only do the tables not need to be acquired, but the multicast service switching time has been rendered invisible to the user. Lastly, the GOP constitution described above for low-resolution programs reduces the time required to demultiplex and buffer video data for the first I-frame.

In parallel with the processing and display of low-resolution program P2, and in response to the multicast join message for joining multicast service 3.2, the receiver demultiplexes the PAT/PMT tables of that multicast service and demultiplexes and buffers the video data for a first full-resolution I-frame. Once the full resolution program P2 can be displayed, the receiver stops decoding the low resolution version of P2, displays the full resolution program and sends a multicast leave message for multicast service 3.1.

Note that according to the preferred embodiment, all multicast services comprise a full-resolution program and two low-resolution programs, differing in their content from the full-resolution program. However, the embodiment may be applied to only certain programs, for example in order to reduce bandwidth. The other programs will then be transmitted only in full-resolution, with no adjacent low-resolution streams in the same multiplex. In particular, the embodiment can be applied to a subgroup of most viewed programs, which will be grouped in the predetermined program order to as to be adjacent.

Note that according to the preferred embodiment, a multicast service comprises a full-resolution program and two low-resolution programs, one of which preceding, the other one following the full-resolution program in the program order. If bandwidth is less of an issue, more than one low-resolution program preceding or following the full-resolution stream may be included into a single multicast service. The number of low-resolution streams preceding the full-resolution stream and the number following it need not be the same. This will enable faster display of more up-converted low-resolution programs when changing channels quickly.

Note that while the above embodiment uses multicast services, the invention may also be applied to unicast services, wherein a unicast services comprises a full-resolution program and at least one adjacent low-resolution program. However, the use of unicast services renders the system less scalable.

Note that while in the preferred embodiment described above, a program adjacent to the 'main' program of a multicast service is sent in lower resolution, it is sufficient that the actual bandwidth or data rate used for the adjacent program(s) be lower. This can be achieved by other means than reducing resolution per se, e.g. by acting on the compression algorithm. These means can be combined with a lower resolution.

The predetermined order mentioned in the preferred embodiment may also result implicitly from the content of the currently tuned multicast service. I.e. the 'next' or the 'previous' program compared to the current program is one the low-resolution programs present in the same multicast (e.g. based on program number for instance). Based on the identity of the selected low-resolution program, the receiver can then request joining the correct multicast group containing the full-resolution program.

Whether the invention is applied to multicast or unicast services, such a stream may comprise any combination of adjacent full-resolution and low-resolution programs. Preferably, in such a multiplexed stream, the most popular programs are transmitted in full-resolution, while the programs on which the user is less likely to remain.are coded as low-resolution programs.

While the embodiment is placed in an Internet Protocol network environment, the invention is not limited to such a specific environment and can for example be applied in any transmission system where switching from one program to another requires a certain time which is noticeable by the end user. The receiver ought to be able to open in parallel, for a certain time, two connections, receive two multiplexes or be member of two multicast groups in order to be able to provide display of a low-resolution version of a program while setting up a higher resolution program.

Bibliographical references for IP related protocols mentioned in the description of the embodiment are as follows:
IETF RFC 3984: "RTP payload Format for H.264 Video", Wenger S. et al., February 2005.
IETF RFC 791: "Internet Protocol"
IETF RFC 3376: "Internet Group Management Protocol, Version 3"
IETF RFC 3550: "RTP: A Transport Protocol for Real-Time Applications", Schulzrinne H. et al., July 2003.
IETF STD 0006: "User Datagram Protocol", Postel J., August 1980.
IETF STD 0007: "Transmission Control Protocol", Postel J., September 1981.
ETSI TS 102 034: "Digital Video Broadcasting (DVB); Transport of MPEG-2 Based DVB Services over IP Based Networks".

## Claims

1. Method for transmitting video services in a digital video transmission network, the method being **characterized**, at the level of a transmission device (5) by the steps of:
- providing a first multiplex (3.1) comprising a first video service (P1) in a first resolution;
- providing, in the first multiplex (3.1), a second video service (P2) in a second resolution lower than the first resolution wherein the second video service (P2) is adjacent to the first video service (P1) in a predetermined order and wherein the first and second video services (P1, P2) contain distinct content.

2. Method according to claim 1, wherein the second video service (P2) immediately follows the first service (P1) in the predetermined order and wherein the first multiplex (3.1) further contains a third video service (P0) in the second resolution, wherein the third video service (P0) immediately precedes the first video service (P1) according to the predetermined order.

3. Method according to one of the claims 1 or 2, further comprising the step of providing a second multiplex (3.2) comprising said second video service (P2) in said first resolution and said first video service (P1) in said second resolution.

4. Method according to one of the claims 1 to 3, wherein each of the multiplexes (3.1, 3.2) is sent in a distinct multicast or unicast service.

5. Method according to one of the claims 1 to 4, wherein a video service in the second resolution comprises access points at a higher frequency than the same service in the first resolution.

6. Method according to one of the claims 1 to 5, further comprising the step of communicating said predetermined order to at least one receiver.

7. Method according to one of the claims 1 to 6, wherein the predetermined order is the order of the video services when jumping from one video service to another using channel up and down keys at a receiver.

8. Method for receiving video services in a digital video transmission network, the method being **characterized**, at the level of a receiver (1) by the steps of:
- receiving a first multiplex (3.1) comprising a first video service (P1) in a first resolution and a second video service (P2) in a second resolution lower than the first resolution wherein the second video service (P2)
- receiving a control input for displaying the second video service (P2);
- processing second video service (P2) data received through the first multiplex (3.1) for display at the first resolution;
- receiving a second multiplex (3.2) comprising the second video service (P2) at the first resolution;
- switching from displaying the second video service (P2) received through the first multiplex (3.1) to displaying the second video service (P2) received through the second multiplex (3.2).

9. Method according to claim 8, further comprising the step of stopping reception of the first multiplex (3.1) after the switching step.

10. Method according to one of the claims 8 or 9, wherein each multiplex is transmitted in distinct unicast or multicast services.

11. Method according to one of the claims 8 to 10, wherein a video service in the second resolution comprises access points at a higher frequency than the same service in the first resolution.

12. Method according to one of the claims 8 to 11, further comprising the step of extracting and storing service data for the second video service before the control input reception step.
